# EUROPEAN PATENT SPECIFICATION

(11) **EP 4 325 602 B1**
(45) Date of publication and mention of the grant of the patent: **25.02.2026**
(21) Application number: 23761411.0
(22) Date of filing: 19.05.2023
(51) Int. Cl.: H01M 4/36, H01M 4/38, H01M 4/48, H01M 4/587, H01M 4/62, H01M 10/0525, C01B 32/05

(54) **NEGATIVE ELECTRODE MATERIAL AND PREPARATION METHOD THEREFOR, AND LITHIUM ION BATTERY**
NEGATIVELEKTRODENMATERIAL UND HERSTELLUNGSVERFAHREN DAFÜR SOWIE LITHIUM-IONEN-BATTERIE
MATÉRIAU D'ÉLECTRODE NÉGATIVE ET SON PROCÉDÉ DE PRÉPARATION, ET PILE AU LITHIUM-ION

(30) Priority: 29.06.2022 CN 202210757543
(43) Date of publication of application: 21.02.2024
(73) Proprietor: BTR NEW MATERIAL GROUP CO., LTD., Shenzhen, Guangdong 518106 (CN); Dingyuan New Energy Technology Co., Ltd., Huizhou, Guangdong 516227 (CN)
(72) Inventor: XIAO, Chengmao, Shenzhen, Guangdong 518106 (CN); HE, Peng, Shenzhen, Guangdong 518106 (CN); GUO, Eming, Shenzhen, Guangdong 518106 (CN); REN, Jianguo, Shenzhen, Guangdong 518106 (CN); HE, Xueqin, Shenzhen, Guangdong 518106 (CN)
(74) Representative: advotec.
(86) International application number: PCT/CN2023/095292
(87) International publication number: WO 2024/001605

(56) References cited:
- WO-A1-2022/029422
- CN-A- 103 305 965
- CN-A- 105 304 908
- CN-A- 108 475 779
- CN-A- 110 649 254
- CN-A- 110 649 254
- CN-A- 113 330 599
- CN-A- 114 127 985
- GB-A- 2 587 327
- US-A1- 2020 373 561
- US-A1- 2022 074 045
- US-B1- 10 964 940

## Description

### TECHNICAL FIELD

The present disclosure relates to the technical field of anode material, and in particular, to an anode material, a preparation method thereof, and a lithium ion battery.

### BACKGROUND

Silicon is the second most abundant element in the Earth's crust, which is a common semiconductor material and has become an indispensable and important technical basis for modern high-tech society. Elemental silicon has extensive and important applications in energy, semiconductor, organic silicon, metallurgical industry, and the like. At present, an anode material of a mature commercial lithium ion battery is mostly a graphite-based carbon material, but a theoretical lithium storage capacity of the carbon material is only 372 mAh/g, which cannot meet people's demand for a high-energy density material. Silicon, as an anode material for the lithium ion battery, has a very high theoretical capacity (about 4200 mAh/g), which is ten times higher than that of a commercial graphite, thus having a great prospect in energy storage.

At present, a silicon anode has a severe volume expansion effect during cycling, which leads to pulverization and fragmentation of the material and fast cycling degradation of the battery. Therefore, developing an anode material with a high capacity and good cycling performance is a technical problem in the field of lithium ion battery.

A silicon composite anode for a lithium-ion battery is known from US 2022/074045 A1.

### SUMMARY

With respect to the above problems existing in the prior art, the present disclosure is to provide an anode material, a preparation method thereof, and a lithium ion battery as disclosed in the appended claims. The anode material of the present disclosure has high conductivity, can effectively inhibit volume expansion, and improve capacity performance and cycling performance of the anode material.

The technical solution of the present disclosure involves at least the following beneficial effects:
The core of the anode material in the present disclosure includes porous carbon and active material. The first pore structure of the porous carbon is micropore (with an average pore size less than or equal to 2 nm), and the micropores with a volume ratio greater than or equal to 40% can provide an additional space for expansion of the active material, and effectively relieving volume expansion, thereby preventing or reducing pulverization of the anode material due to a huge volume change and stress during intercalating and de-intercalating lithium. The second pore structure of the porous carbon is pore with a pore size greater than 2 nm, and the active material is filled in the second pore structure of the porous carbon to enable the filling ratio of the second pore structure to be greater than or equal to 95%, which can prevent issues of stress concentration and electrolyte penetration caused by the material while increasing a capacity of the material. An appropriate number of small pores are kept in the anode material as well as preventing pores with an excessively large pore size. A synergistic effect of the two pore structures enables the anode material of the present disclosure to effectively inhibit volume expansion and have advantages of high rate performance, a high capacity, and good cycling performance. In the anode material of the present disclosure, the coating layer arranged on at least part of the surface of the core can reduce direct contact between the active material in the core and electrolyte, reducing occurrence of a side reaction between the anode material and the electrolyte, thereby increasing a specific capacity of the anode material, which can further inhibit volume expansion of the anode material, improve conductivity of the anode material, facilitate to improve transmission efficiency of lithium ions, and improve rate performance and cycling performance of the anode material.

According to the preparation method of an anode material in the present disclosure, a precursor is obtained by mixing a raw material containing porous carbon and active material under vacuum, where a material of the porous carbon includes pore structures with two pore sizes. The first pore structure of the porous carbon is micropores (with a pore size less than or equal to 2 nm), and the second pore structure of the porous carbon is pore with a pore size greater than 2 nm. According to the present disclosure, by mixing under vacuum, the active material fills in the second pore structure of the porous carbon which is larger, and under vacuum pressure less than or equal to 10 Pa, the filling ratio of the second pore structure is greater than or equal to 95%, thereby preventing issues of stress concentration and electrolyte penetration caused by the material due to existence of the second pore structure. Finally, the precursor is coated, which, on the one hand, can prevent a decrease in initial Coulombic efficiency and the specific capacity caused by a side reaction occurred by electrolyte entering the anode material, and on the other hand, can relieve volume expansion of the active material, reducing volume expansion of the entire anode material, and reducing swelling of electrode plate. The preparation method of the present disclosure is simple. Through the selection of the porous carbon with specific pore structures and specific sizes, the active material fills in the second pore structure inside the porous carbon, which can effectively inhibit volume expansion and further improve rate performance, specific capacity, and cycling performance of the anode material.

### BRIEF DESCRIPTION OF DRAWINGS

The present disclosure is further described below with reference to accompanying drawings and embodiments.
FIG. 1 is a first schematic structural diagram of an anode material according to the present disclosure;
FIG. 2 is a schematic structural diagram of porous carbon with active material distributed in a second pore structure according to the present disclosure;
FIG. 3 is a second schematic structural diagram of the anode material according to the present disclosure;
FIG. 4 is a flowchart of preparation method of the anode material according to the present disclosure;
FIG. 5 is a scanning electron microscopy (SEM) image of the anode material prepared by Example 1 of the present disclosure;
FIG. 6 is an X-ray diffraction (XRD) graph of the anode material prepared by Example 1 of the present disclosure;
FIG. 7 shows a curve of initial charge and discharge of the anode material prepared by Example 1 of the present disclosure; and
FIG. 8 shows a curve of cycling performance of the anode material prepared by Example 1 of the present disclosure.

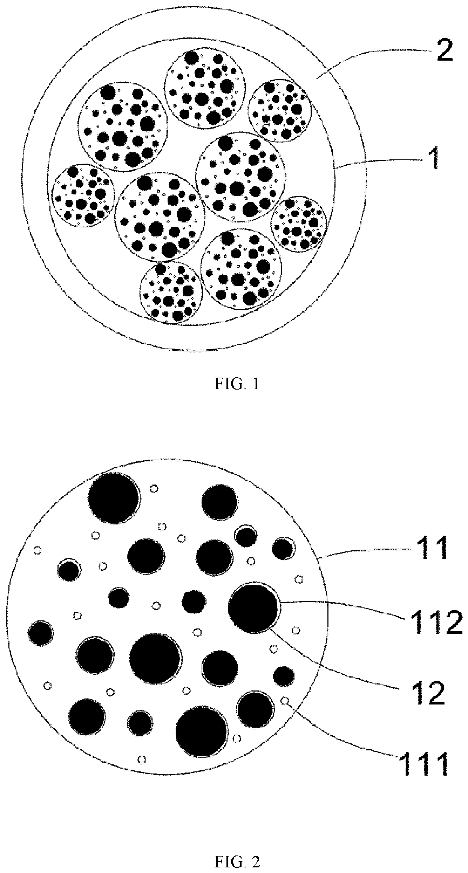

In FIGs. 1, 2, and 3,
1: core;
11: porous carbon;
   111: first pore structure;
   112: second pore structure;
12: active material;
2: coating layer.

### DESCRIPTION OF EMBODIMENTS

To better understand the technical solutions of the present disclosure, some embodiments of the present disclosure will be described in detail below with reference to the accompanying drawings.

It should be clear that the described embodiments are only some of rather than all of the embodiments of the present disclosure. Based on the embodiments in the present disclosure, all other embodiments obtained by those of ordinary skill in the art without making creative efforts fall within the protection scope of the present disclosure.

Terms used in the embodiments of the present disclosure are only for the purpose of describing specific embodiments, and are not intended to limit the present disclosure. Singular forms of "a/an", "one", and "the" used in the embodiments of the present disclosure and the appended claims are intended to include plural forms, unless otherwise clearly specified in the context.

It is to be understood that the term "and/or" used herein only describes an association relationship between associated objects and represents that three relationships may exist. For example, A and/or B may represent the following three cases: only A exists, both A and B exist, and only B exists. In addition, the character "/" herein generally indicates an "or" relationship between the associated objects.

As shown in FIG. 1, the anode material includes a core 1 and a coating layer 2 arranged on at least part of a surface of the core 1. As shown in FIG. 2, the core 1 includes porous carbon 11 and active material 12 filling in pore structure of the porous carbon 11. The porous carbon 11 has a first pore structure 111 with a pore size less than or equal to 2 nm and a second pore structure 112 with a pore size greater than 2 nm. A ratio of a pore volume of the first pore structure 111 to a total pore volume of the porous carbon 11 is greater than or equal to 40%, and the second pore structure 112 has a filling ratio greater than or equal to 95%.

In the above solution, the core 1 of the anode material in the present disclosure includes porous carbon 11 and active material 12. The porous carbon 11 includes pore structures with two pore sizes. The first pore structure 111 of the porous carbon 11 is micropore (with a pore size less than or equal to 2 nm), and the micropores with a volume ratio greater than or equal to 40% can provide an additional space for expansion of the active material 12, and effectively relieving volume expansion, thereby preventing or reducing pulverization of the anode material due to a huge volume change and stress during intercalating and de-intercalating lithium. The second pore structure 112 of the porous carbon 11 is pore with a pore size greater than 2 nm. The second pore structure easily causes stress concentration and electrolyte penetration, so there is a need to fill the second pore structure as much as possible. The active material 12 fills in the second pore structure 112 of the porous carbon 11, so that the second pore structure 112 has a filling ratio greater than or equal to 95%, which can prevent issues of stress concentration and electrolyte penetration caused by the second pore structure while increasing a capacity of the material. An appropriate number of small pores are kept in the anode material as well as decreasing pores with an excessively large pore size. A synergistic effect of the two pore structures enables the anode material of the present disclosure to effectively inhibit volume expansion and have advantages of high rate performance, a high capacity, and good cycling performance. In the anode material of the present disclosure, the coating layer arranged on at least part of the surface of the core can reduce direct contact between the active material in the core and electrolyte, reducing occurrence of a side reaction between the anode material and the electrolyte, thereby increasing a specific capacity of the anode material, which can further inhibit volume expansion of the anode material, improve conductivity of the anode material, facilitate to improve transmission efficiency of lithium ions, and improve rate performance and cycling performance of the anode material.

In some embodiments, the porous carbon 11 has a first pore structure 111 with a pore size less than or equal to 2 nm and a second pore structure 112 with a pore size greater than 2 nm. Specifically, the pore size of the first pore structure 111 can be 0.05 nm, 0.07 nm, 0.1 nm, 0.3 nm, 0.5 nm, 0.8 nm, 1 nm, 1.5 nm, 2 nm, etc., or other value within the above range, which is not limited herein. For example, the pore size of the second pore structure 112 can be 2.5 nm, 5 nm, 10 nm, 20 nm, 100 nm, 150 nm, 200 nm, 250 nm, 300 nm, etc., or other value within the above range, which is not limited herein.

In the porous carbon of the present disclosure, the first pore structure 111 is a pore with a pore size less than or equal to 2 nm, and the second pore structure 112 is a pore with a pore size greater than 2 nm. The first pore structure 111 with a smaller pore size can effectively relieve volume expansion of the active material 12, while reducing expansion of an electrode film, and improving safety of a battery. Compared with the first pore structure 111, the second pore structure 112 has a larger pore size, and the second pore structure 112 with the larger pore size is filled with the active material, which can reduce stress concentration and electrolyte penetration caused by the second pore structure, while increasing a capacity of the anode material.

A ratio of a pore volume of the first pore structure 111 to a total pore volume of the porous carbon 11 can be, specifically, 40%, 45%, 50%, 55%, 60%, 65%, 70%, etc., or other value within the above range, which is not limited herein. If the pore volume proportion of the first pore structure 111 is less than 40%, volume expansion of silicon cannot be effectively relieved. Preferably, the ratio of the pore volume of the first pore structure 111 to the total pore volume of the porous carbon 11 is greater than or equal to 45%.

The filling ratio of the second pore structure 112 can be, specifically, 95%, 96%, 97%, 98%, 99%, etc., or other value within the above range, which is not limited herein. If the filling ratio of the second pore structure 112 is less than 95%, stress concentration and electrolyte penetration caused by the material may easily occur. It is to be noted that the filling ratio of the second pore structure 112 can refer to a filling ratio of the active material 12 in the pores or a filling ratio of the coating layer material and the active material both in the pores, preferably the filling ratio of the active material in the pores, which facilitate to increase capacity of the anode material.

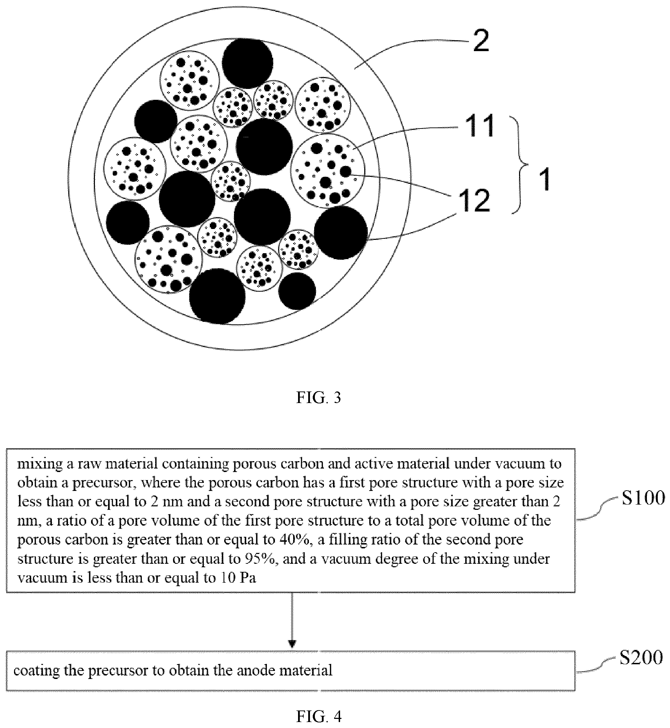

In FIG. 3, the anode material further includes active material 12 distributed among the porous carbon 11. That is, the active material 12 is further distributed among particles of the porous carbon 11 while the active material 12 fills in the pore structure of the porous carbon 11.

In the present disclosure, a median particle size D1 of the porous carbon 11 and a median particle size D2 of the active material 12 satisfy: 0.4≤D1/D2≤6. For example, D1/D2 can be 0.4, 0.5, 1, 1.5, 2, 2.5, 3, 3.5, 4, 4.5, 6, etc., or other value within the above range, which is not limited herein. When the median particle size D1 of the porous carbon 11 and the median particle size D2 of the active material 12 satisfy: 0.4≤D1/D2≤6, a core structure in which the active material 12 and the porous carbon 11 are well bonded can be obtained. When 0.4≤D1/D2≤1, most of the active material 12 are evenly distributed among the porous carbon 11, and indirectly contact by taking the porous carbon 11 as a buffer layer. When 1<D1/D2≤6, most of the active material 12 fill in the pore structure of the porous carbon 11, and a small part of the active material 12 can be evenly distributed among the porous carbon 11. By distributing the active material in this way, direct contact among the active material 12 can be greatly reduced. Therefore, by controlling the ratio of D1/D2, the volume expansion of the active material 12 can be buffered by means of the porous carbon with high porosity, direct contact among the active material 12 can be prevented, and pulverization of the anode material can be reduced. If the ratio of D1/D2 is greater than 6, that is, the particle size of the porous carbon 11 is much larger than that of the active material 12, on the one hand, bonding between the porous carbon 11 and the active material 12 distributed among the porous carbon 11 may become poor; on the other hand, volume of the porous carbon 11 may exceed volume of the active material 12 in the core 1, resulting in an increase in porosity inside the material, and that capacity of the material cannot be increased. If the ratio of D1/D2 is less than 0.4, that is, the particle size of the active material 12 is much larger than that of the porous carbon 11, direct contact easily occurs among the active material 12, leading to "hard contact" among the active material, which, during intercalating and de-intercalating lithium, forms huge strain that likely cause pulverization and deformation of the active material 12, thereby reducing structural stability of the anode material. Preferably, the median particle size D1 of the porous carbon and the median particle size D2 of the active material satisfy: 0.5≤D1/D2≤4.5.

In an element distribution spectrum obtained by scanning an SEM section of the core of the anode material with X-rays, a distribution surface of C and an active material element is in a uniform dispersion state.

In some embodiments, the active material has a morphology including at least one of a point shape, a spherical shape, an ellipsoidal shape, and a flake shape.

In some embodiments, the active material has a median particle size of 1 nm to 300 nm, which can be, specifically, 1 nm, 10 nm, 20 nm, 50 nm, 80 nm, 100 nm, 200 nm, 300 nm, etc., or other value within the above range, which is not limited herein. Preferably, the active material 12 has an average pore size of 5 nm to 200 nm, and further preferably, the active material has an average pore size of 5 nm to 80 nm.

In some embodiments, the active material includes at least one of Li, Na, K, Sn, Ge, Si, SiOₓ, Fe, Mg, Ti, Zn, Al, Ni, P, and Cu, where 0<x<2. It can be understood that the active material distributed among the porous carbon 11 and the active material in the second pore structure of the porous carbon 11 can be the same or different, or partly the same and partly different.

In some embodiments, if both the active material among the porous carbon 11 and the active material in the second pore structure of the porous carbon 11 are silicon particles, the core 1 includes the porous carbon 11 and a silicon particle. The silicon particle and the porous carbon jointly form the core, and the silicon particle and the porous carbon are evenly distributed. The silicon particle provide a lithium storage capacity, and the porous carbon 11 can buffer a volume change of the silicon particle during charging and discharging, and can also improve conductivity of the silicon particle, thereby improving rate performance of battery. The porous carbon 11 has a first pore structure 111 and a second pore structure 112. A pore size of the first pore structure 111 is smaller than that of the second pore structure 112. The second pore structure 112 is filled with the silicon particle, and the silicon particle are coated with the porous carbon. On the one hand, conductivity of the anode material can be improved, and on the other hand, agglomeration of the silicon particles can be prevented. In the anode material of this embodiment, the silicon particles are located among and inside the porous carbon 11, which can improve conductivity of the anode material, further improve rate performance of the anode material, while relieving volume expansion of nano silicon.

In some embodiments, the porous carbon 11 includes at least one of carbon black, an ordered mesoporous carbon material (CMK), and nanoporous carbon material (NCP).

In some embodiments, the porous carbon 11 has a median particle size of 1 nm to 500 nm, which can be, specifically, 1 nm, 10 nm, 20 nm, 50 nm, 80 nm, 100 nm, 200 nm, 300 nm, 400 nm, 500 nm, etc., or other value within the above range, which is not limited herein. Preferably, the porous carbon 11 has a median particle size of 5 nm to 200 nm, and further preferably, the porous carbon 11 has a median particle size of 5 nm to 150 nm.

In some embodiments, the core 1 has a median particle size of 0.8 µm to 10 µm, which can be, specifically, 0.8 µm, 1 µm, 2 µm, 3 µm, 4 µm, 5 µm, 6 µm, 7 µm, 8 µm, 9 µm, 10 µm, etc., or other value within the above range, which is not limited herein.

In some embodiments, the coating layer 2 includes at least one of a carbon layer, a metal oxide layer, a polymer layer, and a nitride layer. The arrangement of the coating layer 2, on the one hand, can prevent a decrease in initial Coulombic efficiency and the specific capacity caused by a side reaction occurred by electrolyte entering the anode material, and on the other hand, can relieve volume expansion of silicon, reducing volume expansion of the entire composite material, and reducing swelling of electrode plate.

In some embodiments, a material of the carbon layer includes at least one of soft carbon, hard carbon, crystalline carbon, and amorphous carbon.

In some embodiments, a material of the metal oxide layer includes at least one of oxides of Sn, Ge, Fe, Si, Cu, Ti, Na, Mg, Al, Ca, and Zn.

In some embodiments, a material of the nitride layer includes at least one of silicon nitride, aluminum nitride (AlN), titanium nitride (TiN), and tantalum nitride (TaN).

In some embodiments, a material of the polymer layer includes at least one of polyaniline, polyacrylic acid, polyurethane, polydopamine, polyacrylamide, sodium carboxymethyl cellulose, polyimide, and polyvinyl alcohol.

In some embodiments, the coating layer 2 has a thickness of 10 nm to 500 nm, which can be, specifically, 10 nm, 20 nm, 50 nm, 80 nm, 100 nm, 200 nm, 300 nm, 400 nm, 500 nm, etc., or other value within the above range, which is not limited herein. It can be understood that the coating layer 2 can reduce contact between silicon and electrolyte, reduce generation of a passive film, and improve a reversible electric capacity of battery. The thickness of the coating layer 2 is controlled in the above range, which can improve conductivity of the anode material, inhibit volume expansion of the anode material, facilitate to improve transmission efficiency of lithium ions, and facilitate to improve large-rate charge and discharge performance, cycling performance, and comprehensive performance of the anode material.

In some embodiments, the anode material has a specific surface area less than or equal to 10 m²/g, which can be, specifically, 1 m²/g, 2 m²/g, 3 m²/g, 4 m²/g, 5 m²/g, 6 m²/g, 7 m²/g, 8 m²/g, 9 m²/g, 10 m²/g, etc., or other value within the above range, which is not limited herein. It can be understood that, when the specific surface area of the anode material is controlled in the above range, volume expansion of the anode material can be inhibited, which facilitate to improve cycling performance of the anode material.

In some embodiments, the anode material has a median particle size of 0.5 µm to 20 µm, which can be, specifically, 0.5 µm, 1 µm, 3 µm, 5 µm, 8 µm, 10 µm, 15 µm, 18 µm, 20 µm, etc., or other value within the above range, which is not limited herein. Preferably, the anode material has a median particle size of 0.8 µm to 12 µm, and further preferably, the anode material has a median particle size of 1 µm to 8 µm. It can be understood that, when the median particle size of the anode material is controlled in the above range, it facilitate to improve cycling performance of the anode material.

In some embodiments, the anode material has a porosity less than or equal to 10%, which can be, specifically, 1%, 2%, 2.5%, 5%, 7%, 8.5%, 10%, etc., or other value within the above range, which is not limited herein. Preferably, the anode material has a porosity less than or equal to 5%, and further preferably, the anode material has a porosity less than or equal to 2.5%. If the porosity of the anode material is excessively large, tap density of the material decreases, which further leads to a decrease in energy density of the material.

In a second aspect, the present disclosure provides a preparation method of the above anode material, as shown in FIG. 4, including the following steps.

S100, mixing a raw material containing porous carbon and active material under vacuum to obtain a precursor, where the porous carbon has a first pore structure with a pore size less than or equal to 2 nm and a second pore structure with a pore size greater than 2 nm, a ratio of a pore volume of the first pore structure to a total pore volume of the porous carbon is greater than or equal to 40%, a filling ratio of the second pore structure is greater than or equal to 95%, and a vacuum degree of the mixing under vacuum is less than or equal to 10 Pa, and

S200, coating the precursor to obtain the anode material.

In the above solution, according to the preparation method of an anode material in the present disclosure, a precursor is obtained by mixing a raw material containing porous carbon and active material under vacuum, where a material of the porous carbon includes pore structures with two pore sizes. The first pore structure 111 of the porous carbon 11 is micropores (with a pore size less than or equal to 2 nm), and the second pore structure 112 of the porous carbon 11 is pore with a pore size greater than 2 nm. According to the present disclosure, by mixing under vacuum, the active material fills in the second pore structure 112 of the porous carbon which is larger, and under vacuum pressure less than or equal to 10 Pa, the filling ratio of the second pore structure 112 is greater than or equal to 95%, thereby preventing issues of stress concentration and electrolyte penetration caused by the material due to existence of the second pore structure 112. Finally, the precursor is coated, which, on the one hand, can prevent a decrease in initial Coulombic efficiency and the specific capacity of the anode material caused by a side reaction occurred by electrolyte entering the anode material, and on the other hand, can relieve volume expansion of the active material, reducing volume expansion of the entire anode material, and reducing swelling of electrode plate. The preparation method of the present disclosure is simple. Through the selection of the porous carbon with specific pore structures and specific sizes, the active material fills in the second pore structure 112 inside the porous carbon 11, which can effectively inhibit volume expansion and further improve rate performance, specific capacity, and cycling performance of the anode material.

The preparation method of the present disclosure is described specifically below with reference to embodiments.

In S100, mixing a raw material containing porous carbon and active material under vacuum to obtain a precursor, where the porous carbon has a first pore structure and a second pore structure, the first pore structure has an average pore size less than or equal to 2 nm, and the second pore structure has an average pore size greater than 2 nm, a ratio of a pore volume of the first pore structure to a total pore volume of the porous carbon is greater than or equal to 40%, a filling ratio of the second pore structure is greater than or equal to 95%, and a vacuum degree of the mixing under vacuum is less than or equal to 10 Pa.

In some embodiments, the first pore structure 111 can have an average pore size of, specifically, 0.05 nm, 0.07 nm, 0.1 nm, 0.3 nm, 0.5 nm, 0.8 nm, 1 nm, 1.5 nm, 2 nm, etc., or other value within the above range, which is not limited herein.

In some embodiments, the porous carbon 11 has a first pore structure 111 with a pore size less than or equal to 2 nm and a second pore structure 112 with a pore size greater than 2 nm. The second pore structure 112 can have an average pore size of, specifically, 2.5 nm, 5 nm, 10 nm, 20 nm, 100 nm, 150 nm, 200 nm, 250 nm, 300 nm, etc., or other value within the above range, which is not limited herein.

In the porous carbon of the present disclosure, the first pore structure 111 is a pore with a pore size less than or equal to 2 nm, and the second pore structure 112 is a pore with a pore size greater than 2 nm. The first pore structure 111 with a smaller pore size can effectively relieve volume expansion of the active material 12, while reducing expansion of an electrode film, and improving safety of a battery. Compared with the first pore structure 111, the second pore structure 112 has a larger pore size, and the second pore structure 112 with the larger pore size is filled with the active material, which can reduce stress concentration and electrolyte penetration caused by the second pore structure 112.

In some embodiments, a ratio of a pore volume of the first pore structure 111 to a total pore volume of the porous carbon 11 can be, specifically, 40%, 45%, 50%, 55%, 60%, 65%, 70%, etc., or other value within the above range, which is not limited herein. If the pore volume proportion of the first pore structure 111 is less than 40%, volume expansion of silicon cannot be effectively relieved. Preferably, the ratio of the pore volume of the first pore structure 111 to the total pore volume of the porous carbon 11 is greater than or equal to 45%.

In some embodiments, in the present disclosure, the filling ratio of the second pore structure 112 is greater than or equal to 95% by controlling the vacuum degree of the mixing under vacuum to be less than or equal to 10 Pa. In the present disclosure, the vacuum degree of the mixing under vacuum can be, specifically, 10⁻⁷ Pa, 10⁻⁶ Pa, 10⁻⁵ Pa, 10⁻⁴ Pa, 10⁻³ Pa, 10⁻² Pa, 10 Pa, etc., or other value within the above range, which is not limited herein. In the present disclosure, the filling ratio of the active material in the porous carbon is controlled by the mixing under vacuum, so that the active material can fill in the second pore structure of the porous carbon as much as possible. If the vacuum degree is greater than 10 Pa, the vacuum degree is excessively low, it is difficult for a resulting force to fill the active material into the corresponding pores, thus the filling ratio of the second pore structure may decrease. If the vacuum degree is less than 10⁻⁷ Pa, an additional molecular pump is required, which increases additional costs. In addition, excessive vacuum cause the fed silicon source gas to be quickly extracted without time for reaction, resulting in a decrease in the filling rate of the active material.

In some embodiments, the active material includes at least one of Li, Na, K, Sn, Ge, Si, SiOₓ, Fe, Mg, Ti, Zn, Al, Ni, P, and Cu, where 0<x<2.

In the present disclosure, a median particle size D1 of the porous carbon 11 and a median particle size D2 of the active material 12 satisfy: 0.4≤D1/D2≤6, which can be, for example, 0.4, 0.5, 1, 1.5, 2, 2.5, 3, 3.5, 4, 4.5, 5, 5.5, 6, etc., or other value within the above range, which is not limited herein. It can be understood that, if a ratio of the median particle size D1 of the porous carbon 11 and the median particle size D2 of the active material 12 is limited in the above range, an obtained precursor structure includes porous carbon 11, active material 12 filling in the pore structures of the porous carbon 11, and active material 12 distributed among the porous carbon 11. The porous carbon 11 can be uniformly dispersed well with the active material 12 to form a well-dispersed structure. There is no or only a little of direct contact among the active materials, and most of the active materials indirectly contact by taking the porous carbon as a buffer layer, which can buffer volume expansion of the active material by means of the porous carbon with high porosity, and reduce pulverization of the material. If the ratio of D1/D2 is greater than 6, that is, the particle size of the porous carbon 11 is much larger than that of the active material 12, on the one hand, bonding between the porous carbon 11 and the active material 12 distributed among the porous carbon 11 may become poor; on the other hand, volume of the porous carbon 11 may exceed volume of the active material 12 in the core 1, resulting in an increase in porosity inside the material, and that capacity of the material cannot be increased. If the ratio of D1/D2 is less than 0.4, that is, the particle size of the active material 12 is much larger than that of the porous carbon 11, direct contact easily occurs among the active material 12, leading to "hard contact" among the active material, which, during intercalating and de-intercalating lithium, forms huge strain that likely cause pulverization and deformation of the active material 12, thereby reducing structural stability of the anode material. Preferably, the median particle size D1 of the porous carbon and the median particle size D2 of the active material satisfy: 0.5≤D1/D2≤4.5.

In some embodiments, the active material has a median particle size of 1 nm to 300 nm, which can be, specifically, 1 nm, 10 nm, 20 nm, 50 nm, 80 nm, 100 nm, 200 nm, 300 nm, etc., or other value within the above range, which is not limited herein. Preferably, the active material has a median particle size of 5 nm to 200 nm, and further preferably, the active material has a median particle size of 5 nm to 80 nm.

In some embodiments, the porous carbon includes at least one of carbon black, an ordered mesoporous carbon material, and nanoporous carbon material.

In some embodiments, the porous carbon has a median particle size of 1 nm to 500 nm, which can be, specifically, 1 nm, 10 nm, 20 nm, 50 nm, 80 nm, 100 nm, 200 nm, 300 nm, 400 nm, 500 nm, etc., or other value within the above range, which is not limited herein.

In some embodiments, a mass ratio of the porous carbon to the active material is 40:(10-80). Specifically, the mass ratio of the porous carbon to the active material can be 40:10, 40:20, 40:30, 40:40, 40:50, 40:60, 40:70, 40:80, etc., or other value within the above range, which is not limited herein. The mass ratio of the porous carbon to the active material is controlled in the above range, which facilitate to obtain a uniformly dispersed core material, and to improve cycling performance and structural stability of the material.

In some embodiments, a device for the mixing under vacuum includes at least one of a double-star vacuum mixer, a planetary vacuum mixer, a planetary vacuum disperser, a screw vacuum mixer, a multifunctional vacuum mixer, a vacuum disperser, and a vacuum emulsifier.

In some embodiments, the mixing under vacuum has a duration of 0.5 h to 15 h, which can be, specifically, 0.5 h, 1 h, 3 h, 5 h, 7 h, 9 h, 10 h, 12 h, 14 h, 15 h, etc., or other value within the above range, which is not limited herein.

In some embodiments, the method further includes a step of adding an auxiliary agent and a solvent prior to the mixing a raw material containing porous carbon and active material under vacuum. That is, S100 includes: placing a porous carbon, an active material, and an auxiliary agent in a solvent for mixing under vacuum, and drying to obtain the precursor.

In some embodiments, the auxiliary agent includes at least one of polyvinyl alcohol, n-octadecanoic acid, lauric acid, polyacrylic acid, sodium dodecylbenzene sulfonate, n-eicosic acid, palmitic acid, tetradecanoic acid, undecanoic acid, fatty acid, hexadecyl trimethyl ammonium bromide, and polyvinyl pyrrolidone. The above auxiliary agent can modify surfaces of the active material and the pore structure of the porous carbon, so as to make particles of the active material more easily penetrate into the pores of the porous carbon.

In some embodiments, the solvent includes at least one of an organic solvent and a non-organic solvent. The organic solvent includes at least one of phenol, methanol, ethanol, ethylene glycol, propanol, isopropanol, glycerol, n-butanol, isobutanol, n-hexane, cyclohexane, ethyl acetate, chloroform, carbon tetrachloride, methyl acetate, acetone, and amyl alcohol. The non-organic solvent includes at least one of water, liquid ammonia, liquid carbon dioxide, liquid sulfur dioxide, and super acid.

In some embodiments, a mass ratio of the auxiliary agent to the porous carbon is (0.05-3):100, which can be, specifically, 0.05:100, 0.1:100, 1:100, 2:100, 3:100, etc., or other value within the above range, which is not limited herein.

In some embodiments, a mass ratio of the solvent to the porous carbon is 100:(15-55), which can be, specifically, 100:15, 100:20, 100:25, 100:30, 100:35, 100:40, 100:50, 100:55, etc., or other value within the above range, which is not limited herein.

In some embodiments, a drying treatment is further carried out after mixing a raw material containing the porous carbon and the active material under vacuum.

In some embodiments, the drying treatment has a temperature of -50°C to 500°C, which can be, specifically, -50°C, -40°C, -30°C, -20°C, 50°C, 100°C, 150°C, 200°C, 250°C, 300°C, 350°C, 400°C, 450°C, 500°C, etc., or other value within the above range, which is not limited herein. It can be understood that the drying treatment can be a low-temperature freeze-drying treatment or a high-temperature drying treatment.

In some embodiments, the drying treatment has a duration of 0.5 h to 15 h, which can be, specifically, 0.5 h, 1 h, 3 h, 5 h, 7 h, 9 h, 10 h, 12 h, 14 h, 15 h, etc., or other value within the above range, which is not limited herein.

In some embodiments, a device for the drying treatment includes at least one of a rotary evaporator, a vacuum oven, a spray dryer, a heat treatment furnace, and a freeze dryer.

In some embodiments, the step of coating the precursor specifically includes: mixing the precursor and a coating material for a heat treatment to obtain the anode material. Through the coating of the coating material, on the one hand, a decrease in initial Coulombic efficiency and the specific capacity caused by a side reaction occurred by electrolyte entering the anode material can be prevented, and on the other hand, volume expansion of silicon can be relieved, thus reducing volume expansion of the entire composite material, and reducing swelling of electrode plate

In some embodiments, the coating material includes at least one of a carbon material, a metal oxide material, a polymer material, and a nitride material.

In some embodiments, the carbon material includes at least one of soft carbon, hard carbon, crystalline carbon, and amorphous carbon.

In some embodiments, the metal oxide material includes at least one of oxides of Sn, Ge, Fe, Si, Cu, Ti, Na, Mg, Al, Ca, and Zn.

In some embodiments, the nitride material includes at least one of silicon nitride, aluminum nitride, titanium nitride, and tantalum nitride.

In some embodiments, the polymer material includes at least one of polyaniline, polyacrylic acid, polyurethane, polydopamine, polyacrylamide, sodium carboxymethyl cellulose, polyimide, and polyvinyl alcohol.

In some embodiments, a mass ratio of the precursor to the coating material is 100:(5-100), which can be, specifically, 100:5, 100:10, 100:20, 100:30, 100:40, 100:50, 100:60, 100:70, 100:80, 100:90, 100: 100, etc., or other value within the above range, which is not limited herein. If the mass ratio of the precursor to the coating material is less than 100: 100, thickness of the coating layer is excessively thin, which does not facilitate to improve conductivity of the anode material, and has a weak inhibition for volume expansion of the anode material, resulting in poor cycling performance. If the mass ratio of the precursor to the coating material is greater than 100:5, thickness of the coating layer is excessively thick, which reduces transmission efficiency of lithium ions, and degrades comprehensive performance of the anode material.

In some embodiments, the heat treatment has a temperature of 400°C to 900°C, which can be, specifically, 400°C, 500°C, 600°C, 700°C, 800°C, 900°C, etc., or other value within the above range, which is not limited herein.

In some embodiments, the heat treatment has a holding time of 1 h to 12 h, which can be, specifically, 1 h, 2 h, 3 h, 4 h, 5 h, 6 h, 7 h, 8 h, 9 h, 10 h, 11 h, 12 h, etc., or other value within the above range, which is not limited herein.

In some embodiments, the heat treatment has a heating rate of 1°C/min to 15°C/min, which can be, specifically, 1°C/min, 2°C/min, 3°C/min, 4°C/min, 5°C/min, 6°C/min, 7°C/min, 8°C/min, 9°C/min, 10°C/min, 11°C/min, 12°C/min, 13°C/min, 14°C/min, 15°C/min, etc., or other value within the above range, which is not limited herein.

In some embodiments, the heat treatment is carried out under a protective atmosphere, where the protective atmosphere includes at least one of nitrogen, helium, neon, argon, and krypton.

In some embodiments, after the heat treatment, a step of pulverizing and sieving obtained material is further included.

In some embodiments, a device for the pulverizing includes at least one of a mechanical pulverizer, a jet pulverizer, and a crusher.

In some embodiments, a screen size of the sieving is 10 meshes to 800 meshes, which can be, specifically, 10 meshes, 50 meshes, 100 meshes, 200 meshes, 300 meshes, 400 meshes, 500 meshes, 600 meshes, 700 meshes, 800 meshes, etc., or other value within the above range, which is not limited herein.

In a third aspect, the present disclosure provides a lithium ion battery, including the above anode material or the anode material prepared by the above preparation method.

### Example 1

(1) Nano-silicon particles and porous carbon particles were screened by a BET tester and a Malvern particle size analyzer to obtain nano silicon with a median particle size of 17 nm and porous carbon particles with a median particle size of 20 nm. The porous carbon particles were specifically carbon black. A volume proportion of micropores with a pore size less than or equal to 2 nm was 60% in the porous carbon particles.
(2) The screened nano-silicon particles, porous carbon particles, and polyvinyl alcohol with a mass ratio of 50:25:25 were placed in phenol, and then ball milled for 2 h under a controlled vacuum degree of 0.1 Pa in a planetary vacuum ball mill, and underwent rotary evaporation at 120°C to obtain a precursor.
(3) The precursor and phenolic resin were mixed in a mass ratio of 50:45, then the mixed material was placed in a high-temperature box furnace, nitrogen was fed, and heat treatment was carried out at 820°C for 4 h.
(4) The obtained sample was crushed, sieved, and then classified to obtain the anode material.

The anode material prepared by this Example has a core-shell structure, the core includes porous carbon and nano-silicon particles distributed in pore structure of the porous carbon, and the shell is a carbon coating layer. The porous carbon has a first pore structure and a second pore structure. Values of a volume proportion of the first pore structure, a filling ratio of the second pore structure, a median particle size of the porous carbon, and a median particle size of the nano-silicon particle are shown in Table 1.

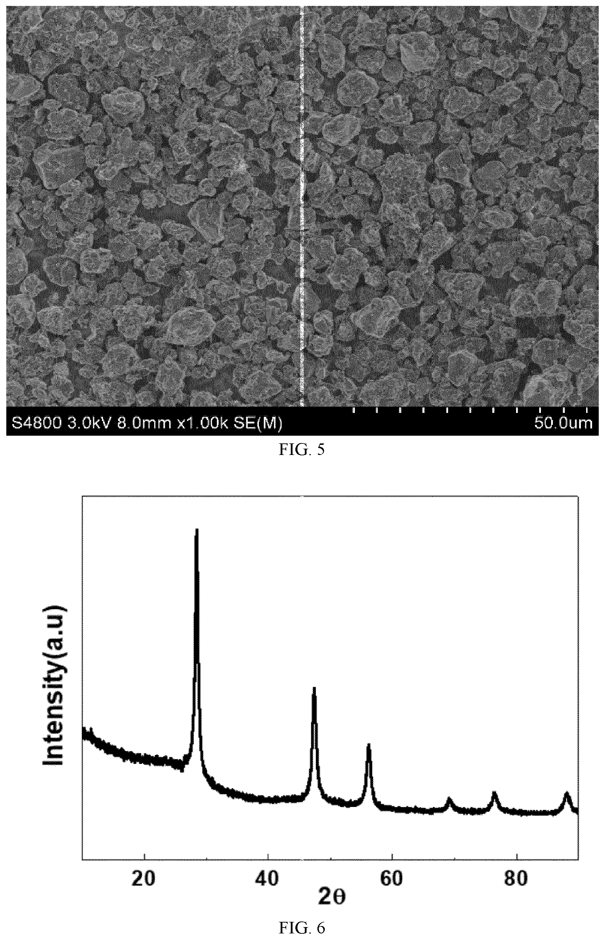

FIG. 6 is an XRD graph of the anode material prepared by Example 1. It can be seen from FIG. 6 that there is a peak position of a silicon peak in the product.

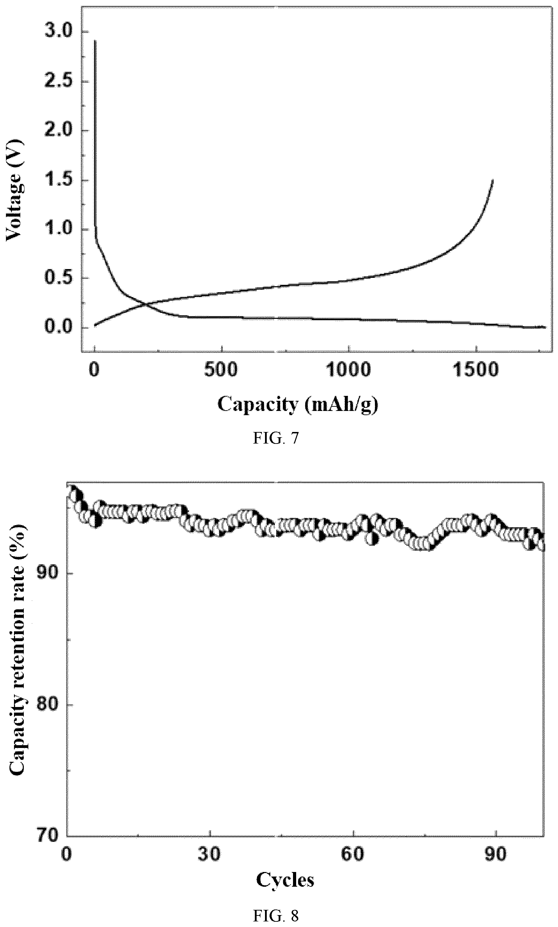

FIG. 7 shows a curve of initial charge and discharge of the anode material prepared by Example 1. It can be seen from FIG. 7 that the material has a high initial charge and discharge capacity and high initial Coulombic efficiency.

FIG. 8 shows a curve of cycling performance of the anode material prepared by Example 1. It can be seen from FIG. 8 that the anode material prepared by this Example has an excellent cycling performance, and a capacity retention rate after 100 cycles is 92.1%.

### Example 2

(1) Nano-silicon particles and porous carbon particles were screened by a BET tester and a Malvern particle size analyzer to obtain nano silicon with a median particle size of 50 nm and porous carbon particles with a median particle size of 40 nm. The porous carbon particles were specifically carbon black. A volume proportion of micropores with a pore size less than or equal to 2 nm was 45% in the porous carbon particles.
(2) The screened nano-silicon particles, porous carbon particles, and polyvinyl alcohol with a mass ratio of 50:25:25 were placed in phenol, and then ball milled for 2 h under a controlled vacuum degree of 0.1 Pa in a planetary vacuum ball mill, and underwent rotary evaporation at 120°C to obtain a precursor.
(3) The precursor and phenolic resin were mixed in a mass ratio of 50:45, then the mixed material was placed in a high-temperature box furnace, nitrogen was fed, and heat treatment was carried out at 820°C for 4 h.
(4) The obtained sample was crushed, sieved, and then classified to obtain the anode material.

FIG. 5 is an SEM image of the anode material prepared by Example 1. The anode material prepared by this Example has a core-shell structure, the core includes porous carbon, nano-silicon particles distributed in pore structures of the porous carbon, and nano-silicon particles distributed among the porous carbon, and the shell is a carbon coating layer. The porous carbon has a first pore structure and a second pore structure. The second pore structure is filled with the nano silicon. Values of a volume proportion of the first pore structure, a filling ratio of the second pore structure, a median particle size of the porous carbon, and a median particle size of the nano-silicon particle are shown in Table 1.

### Example 3

(1) Nano-silicon particles and porous carbon particles were screened by a BET tester and a Malvern particle size analyzer to obtain nano silicon with a median particle size of 30 nm and porous carbon particles with a median particle size of 50 nm. The porous carbon particles were specifically Ketjen black. A volume proportion of micropores with a pore size less than or equal to 2 nm was 49% in the porous carbon particles.
(2) The screened nano-silicon particles, porous carbon particles, and polyvinyl alcohol with a mass ratio of 50:35:22 were placed in isopropanol, and then mixed for 4 h under a controlled vacuum degree of 0.01 Pa in a double-star vacuum mixer, and underwent rotary evaporation at 150°C to obtain a precursor.
(3) The precursor and sucrose were mixed in a mass ratio of 50:55, then the mixed material was placed in a high-temperature box furnace, nitrogen was fed, and heat treatment was carried out at 920°C for 3 h.
(4) The obtained sample was crushed, sieved, and then classified to obtain the anode material.

The anode material prepared by this Example has a core-shell structure, the core includes porous carbon, nano-silicon particles distributed in pore structures of the porous carbon, and nano-silicon particles distributed among the porous carbon, and the shell is a carbon coating layer. The porous carbon has a first pore structure and a second pore structure. The second pore structure is filled with the nano silicon. Values of a volume proportion of the first pore structure, a filling ratio of the second pore structure, a median particle size of the porous carbon, and a median particle size of the nano-silicon particle are shown in Table 1.

### Example 4

(1) Nano-silicon particles and porous carbon particles were screened by a BET tester and a Malvern particle size analyzer to obtain nano silicon with a median particle size of 20 nm and porous carbon particles with a median particle size of 30 nm. The porous carbon particles were specifically MCM-41. A volume proportion of micropores with a pore size less than or equal to 2 nm was 55% in the porous carbon particles.
(2) The screened nano-silicon particles, porous carbon particles, and polyvinyl alcohol with a mass ratio of 50:31:18 were placed in butanol, and then mixed for 5 h under a controlled vacuum degree of 10⁻⁵ Pa in a vacuum disperser, and underwent rotary evaporation at 220°C to obtain a precursor.
(3) The precursor and glucose were mixed in a mass ratio of 50:45, then the mixed material was placed in a high-temperature box furnace, nitrogen was fed, and heat treatment was carried out at 780°C for 5 h.
(4) The obtained sample was crushed, sieved, and then classified to obtain the anode material.

The anode material prepared by this Example has a core-shell structure, the core includes porous carbon, nano-silicon particles distributed in pore structures of the porous carbon, and nano-silicon particles distributed among the porous carbon, and the shell is a carbon coating layer. The porous carbon has a first pore structure and a second pore structure. Values of a volume proportion of the first pore structure, a filling ratio of the second pore structure, a median particle size of the porous carbon, and a median particle size of the nano-silicon particle are shown in Table 1.

### Example 5

(1) Nano-silicon particles and porous carbon particles were screened by a BET tester and a Malvern particle size analyzer to obtain nano silicon with a median particle size of 60 nm and porous carbon particles with a median particle size of 80 nm. The porous carbon particles were specifically ordered mesoporous carbon (CMK-3). A volume proportion of micropores with a pore size less than or equal to 2 nm was 62% in the porous carbon particles.
(2) The screened nano-silicon particles, porous carbon particles, and polyvinyl alcohol with a mass ratio of 40:25:25 were placed in phenol, and then mixed for 2 h under a controlled vacuum degree of 1.5 Pa in a screw vacuum mixer, and underwent rotary evaporation at 120°C to obtain a precursor.
(3) The precursor and polyvinylamine were mixed, and heat treatment was carried out at 350°C.
(4) The obtained sample was crushed, sieved, and then classified to obtain the anode material.

The anode material prepared by this Example has a core-shell structure, the core includes porous carbon, nano-silicon particles distributed in pore structures of the porous carbon, and nano-silicon particles distributed among the porous carbon, and the shell is a polymer coating layer. The porous carbon has a first pore structure and a second pore structure. Values of a volume proportion of the first pore structure, a filling ratio of the second pore structure, a median particle size of the porous carbon, and a median particle size of the nano-silicon particle are shown in Table 1.

### Example 6

(1) SiO particles and porous carbon particles were screened by a BET tester and a Malvern particle size analyzer to obtain SiO particles with a median particle size of 25 nm and porous carbon particles with a median particle size of 20 nm. The porous carbon particles were specifically NCP. A volume proportion of micropores was 70% in the porous carbon particles.
(2) The screened SiO particles, porous carbon particles, and polyvinyl alcohol with a mass ratio of 30:25:15 were placed in phenol, and then mixed for 8 h under a controlled vacuum degree of 3 Pa in a vacuum mixer, and underwent rotary evaporation at 150°C to obtain a precursor.
(3) The precursor and asphalt were mixed in a mass ratio of 30:25, then the mixed material was placed in a high-temperature box furnace, nitrogen was fed, and heat treatment was carried out at 980°C for 3 h.
(4) The obtained sample was crushed, sieved, and then classified to obtain the anode material.

The anode material prepared by this Example has a core-shell structure, the core includes porous carbon, SiO particles distributed in pore structures of the porous carbon, and SiO particles distributed among the porous carbon, and the shell is a carbon coating layer. The porous carbon has a first pore structure and a second pore structure. Values of a volume proportion of the first pore structure, a filling ratio of the second pore structure, a median particle size of the porous carbon, and a median particle size of the SiO particle are shown in Table 1.

### Example 7

(1) Nano-silicon particles and porous carbon particles were screened by a BET tester and a Malvern particle size analyzer to obtain nano silicon with a median particle size of 50 nm and porous carbon particles with a median particle size of 40 nm. The porous carbon particles were specifically carbon black. A volume proportion of micropores with a pore size less than or equal to 2 nm was 45% in the porous carbon particles.
(2) The screened nano-silicon particles, porous carbon particles, and polyvinyl alcohol with a mass ratio of 30:25:15 were placed in phenol, and then mixed for 8 h under a controlled vacuum degree of 5 Pa in a vacuum mixer, and underwent rotary evaporation at 150°C to obtain a precursor.
(3) The precursor and asphalt were mixed in a mass ratio of 30:25, then the mixed material was placed in a high-temperature box furnace, nitrogen was fed, and heat treatment was carried out at 980°C for 3 h.
(4) The obtained sample was crushed, sieved, and then classified to obtain the anode material.

The anode material prepared by this Example has a core-shell structure, the core includes porous carbon, nano-silicon particles distributed in pore structures of the porous carbon, and nano-silicon particles distributed among the porous carbon, and the shell is a carbon coating layer. The porous carbon has a first pore structure and a second pore structure. Values of a volume proportion of the first pore structure, a filling ratio of the second pore structure, a median particle size of the porous carbon, and a median particle size of the nano-silicon particle are shown in Table 1.

### Example 8

The example was conducted as Example 2 excepting that the vacuum degree was replaced with 10⁻⁷ Pa in step (2).

The anode material prepared by this Example has a core-shell structure, the core includes porous carbon, nano-silicon particles in pore structures of the porous carbon, and nano-silicon particles distributed among the porous carbon, and the shell is a carbon coating layer. The porous carbon has a first pore structure and a second pore structure. Values of a volume proportion of the first pore structure, a filling ratio of the second pore structure, a median particle size of the porous carbon, and a median particle size of the nano-silicon particle are shown in Table 1.

### Example 9

The example was conducted as Example 2 excepting that the vacuum degree was replaced with 10 Pa in step (2).

The anode material prepared by this Example has a core-shell structure, the core includes porous carbon, nano-silicon particles in pore structures of the porous carbon, and nano-silicon particles distributed among the porous carbon, and the shell is a carbon coating layer. The porous carbon has a first pore structure and a second pore structure. Values of a volume proportion of the first pore structure, a filling ratio of the second pore structure, a median particle size of the porous carbon, and a median particle size of the nano-silicon particle are shown in Table 1.

### Example 10

The example was conducted as Example 2 excepting thatthe precursor and titanium oxide were mixed in a mass ratio of 50:35.

The anode material prepared by this Example has a core-shell structure, the core includes porous carbon, nano-silicon particles in pore structures of the porous carbon, and nano-silicon particles distributed among the porous carbon, and the shell is a titanium oxide coating layer. The porous carbon forms a first pore structure and a second pore structure. Values of a volume proportion of the first pore structure, a filling ratio of the second pore structure, a median particle size of the porous carbon, and a median particle size of the nano-silicon particle are shown in Table 1.

### Example 11

The example was conducted as Example 2 excepting that the precursor and silicon nitride were mixed in a mass ratio of 50:35.

The anode material prepared by this Example has a core-shell structure, the core includes porous carbon, nano-silicon particles in pore structures of the porous carbon, and nano-silicon particles distributed among the porous carbon, and the shell is a silicon nitride coating layer. The porous carbon forms a first pore structure and a second pore structure. Values of a volume proportion of the first pore structure, a filling ratio of the second pore structure, a median particle size of the porous carbon, and a median particle size of the nano-silicon particle are shown in Table 1.

### Example 12

The example was conducted as Example 2 excepting that the median particle size of the nano silicon was 50 nm, and the median particle size of the porous carbon was 250 nm.

The anode material prepared by this Example has a core-shell structure, the core includes porous carbon, nano-silicon particles distributed in pore structures of the porous carbon, and nano-silicon particles distributed among the porous carbon, and the shell is a carbon coating layer. The porous carbon has a first pore structure and a second pore structure. The second pore structure is filled with the nano silicon. Values of a volume proportion of the first pore structure, a filling ratio of the second pore structure, a median particle size of the porous carbon, and a median particle size of the nano-silicon particle are shown in Table 1.

### Example 13

The example was conducted as Example 2 excepting that the median particle size of the nano silicon was 50 nm, and the median particle size of the porous carbon was 20 nm.

The anode material prepared by this Example has a core-shell structure, the core includes porous carbon, nano-silicon particles distributed in pore structures of the porous carbon, and nano-silicon particles distributed among the porous carbon, and the shell is a carbon coating layer. The porous carbon has a first pore structure and a second pore structure. The second pore structure is filled with the nano silicon. Values of a volume proportion of the first pore structure, a filling ratio of the second pore structure, a median particle size of the porous carbon, and a median particle size of the nano-silicon particle are shown in Table 1.

### Example 14

The example was conducted as Example 2 excepting that the porous carbon particles were specifically carbon block, and a volume proportion of micropores with a pore size less than or equal to 2 nm was 40.1% in the porous carbon particles.

The anode material prepared by this Example has a core-shell structure, the core includes porous carbon, nano-silicon particles distributed in pore structures of the porous carbon, and nano-silicon particles distributed among the porous carbon, and the shell is a carbon coating layer. The porous carbon has a first pore structure and a second pore structure. The second pore structure is filled with the nano silicon. Values of a volume proportion of the first pore structure, a filling ratio of the second pore structure, a median particle size of the porous carbon, and a median particle size of the nano-silicon particle are shown in Table 1.

### Example 15

The example was conducted as Example 1 excepting that the vacuum degree was replaced with 10⁻⁸ Pa in step (2).

### Comparative Example 1

The example was conducted as Example 1 excepting that a volume proportion of micropores with a pore size less than or equal to 2 nm was 30% in the porous carbon particles.

### Comparative Example 2

The example was conducted as Example 1 excepting that the vacuum degree was replaced with 15 Pa in step (2).

### Comparative Example 3

The example was conducted as Example 1 excepting that the nano silicon, the porous carbon particles, and the polyvinyl alcohol were mixed by a planetary mixer in step (2).

### Performance Testing

1. Silicon in the core of the anode material was etched away by using a hydrofluoric acid solution, then the pore volume of the pore structure was tested by BET pore distribution, and a ratio of a pore volume of the first pore structure and the second pore structure of the porous carbon to a pore volume of the porous carbon was calculated.
2. A volume V1 of the second pore structure of the material was tested before the active material in the anode material was etched, and a volume V2 of the second pore structure was tested after etching of silicon. (V2-V1)/V2 is the filling ratio of the active material in the second pore structure.
3. The median particle size of the material was tested by using a Malvern particle size analyzer.
4. 200 carbon materials and active material particles were observed under an SEM, and median particle sizes of the two materials were counted by using a Nano measure.
5. The specific surface area of the anode material was tested by using a Micromeritics Tristar3020 specific surface area and pore size analyzer. A certain mass of powder was weighed, and complete degassed under vacuum heating. After removing surface adsorbate, specific surface area of the particles was calculated by amount of adsorbed nitrogen using nitrogen adsorption method.
6. A micropore size distribution method was adopted to test pore volume ΔV of the anode material, true density P of the anode material was tested, and porosity of the anode material = ΔV/(ΔV+1/P).
7. Electrochemical performances were tested by the following method:

Dissolving the anode material, a conductive agent, and a binders in a mass percent of 94:1:5 in water for mixing, controlling solid content to be 50%, then applying to a copper foil current collector, vacuum drying, to prepare an anode plate; and then assembling a 18650 cylindrical single cell by conventional production process by further using a ternary cathode plate (lithium nickel-cobalt-manganate NCM523) prepared by a conventional production process, 1mol/L of electrolyte including lithium hexafluorophosphate LiPF₆/(ethylene carbonate EC + dimethyl carbonate DMC + methyl ethyl carbonate EMC) (v/v=1:1:1), Celgard 2400 separator, and shell. The charge and discharge testing of the cylindrical battery was performed by a LAND cell test system produced by Wuhan Jinnuo Electronics Co., Ltd, under room temperature conditions, charging and discharging at 0.2C constant current, and the charge and discharge voltage was controlled to 2.75 V to 4.2 V. The initial reversible capacity, the initial charge capacity and the initial discharge capacity were obtained. The initial Coulombic efficiency = the initial discharge capacity / the initial charge capacity.

The cycling was repeated for 100 times, and the discharge capacity was recorded as remaining capacity of the lithium ion battery. Capacity retention = the remaining capacity / the initial capacity*100%.

Testing of plate expansion rate (%) after 30 cycles: mixing the anode material with graphite to formulate a definite capacity (450 mAh/g); coating to obtain a plate, testing thickness d1 of the plate; then assembling into a button battery for a test; after cycling for 30 times, disassembling the battery and testing thickness d2 of the plate again. Plate expansion rate = (d2-d1)/d1*100%.

The test results are shown in Table 1.

**Table 1. Performance test data in Examples and Comparative Examples**

| | Ratio of the pore volume of the first pore structure to the pore volume of the porous carbon (%) | Filling ratio of the second pore structu re (%) | Media n particl e size of the porous carbon (nm) | Media n particl e size of the active materi al (nm) | Specifi c surface area of the anode materi al (m²/g) | Media n particl e size of the anode materi al (µm) | Porosit y of the anode materi al (%) | Initial reversi ble capacit y (mAh/ g) | Initial Coulo mbic efficie ncy (%) | Capaci ty retenti on rate after 100 cycles (%) | Expan sion rate of plate after 30 cycles (%) |
|---|---|---|---|---|---|---|---|---|---|---|---|
| Example 1 | 60 | 99.4 | 20 | 17 | 2.5 | 2.5 | 9.9 | 1610 | 89.5 | 96.7 | 35.8 |
| Example 2 | 45 | 95 | 40 | 50 | 4.2 | 5.8 | 8.7 | 1595 | 88.8 | 92.1 | 39.1 |
| Example 3 | 49 | 95.8 | 50 | 30 | 3.9 | 6.9 | 5.5 | 1618 | 87.2 | 94.2 | 38.1 |
| Example 4 | 55 | 96 | 30 | 20 | 2.9 | 9.4 | 6.8 | 1561 | 88.9 | 94.1 | 38.5 |
| Example 5 | 62 | 95.2 | 80 | 60 | 5.5 | 2.9 | 5.9 | 1621 | 88.9 | 92.8 | 38.9 |
| Example 6 | 70 | 96 | 20 | 25 | 3.8 | 4 | 4.8 | 1403 | 75 | 93.9 | 35 |
| Example 7 | 45 | 95.3 | 40.1 | *50.5* | 2.7 | 5.5 | 9.9 | 677.9 | 86.7 | 96.5 | 39.7 |
| Example 8 | 45 | 99.3 | 40.3 | 50.8 | 1.2 | 4.8 | 4.6 | 1588 | 89.9 | 94.5 | 36.4 |
| Example 9 | 45 | 98.3 | 40.2 | 50.5 | 2.9 | 5.3 | 5.8 | 1590 | 89.2 | 93.1 | 37.4 |
| Example 10 | 45 | 95 | 40 | 50 | 4.1 | 5.6 | 8.7 | 1588 | 88.5 | 92 | 38.9 |
| Example 11 | 45 | 95 | 40 | 50 | 4.3 | 5.7 | 8.7 | 1592 | 88.7 | 92 | 39.1 |
| Example 12 | 45.2 | 88.2 | 250 | 50.1 | 4.2 | 6.4 | 12.7 | 1549 | 85.8 | 87.5 | 45.2 |
| Example 13 | 45.3 | 93.4 | 20 | 49.8 | 3.8 | 6.5 | 6.7 | 1603 | 86.9 | 85.9 | 45.6 |
| Example 14 | 40.1 | 94.5 | 42 | 50.4 | 3.1 | 5.6 | 8.5 | 1599 | 88.5 | 92.2 | 45.1 |
| Example 15 | 60 | 87.2 | 20.5 | 17 | 2.3 | 2.6 | 8.6 | 1605 | 86.2 | 83.4 | 42.5 |
| Comparative Example 1 | 30 | 95.4 | 20 | 17 | 2.4 | 2.7 | 7.5 | 1593 | 85.3 | 83.9 | 46.4 |
| Comparative Example 2 | 60 | 55 | 20.2 | 17 | 2.2 | 2.9 | 8.5 | 1611 | 87 | 82.9 | 46.8 |
| Comparative Example 3 | 60 | 45 | 20 | 1.7 | 2.1 | 2.8 | 14.7 | 1625 | 87.1 | 80.1 | 48.8 |

| | | | | | | | | | | | |
|---|---|---|---|---|---|---|---|---|---|---|---|
| * Examples 12-15 are not according to the invention | | | | | | | | | | | |

As can be seen from the data in Table 1, in the anode materials prepared by Examples 1 to 11 of the present disclosure, the active material are uniformly dispersed in pores of the porous carbon to form a well-dispersed structure. There is no or only a little of direct contact among the active material, and most of the active material indirectly contact by taking the porous carbon as a buffer layer, which can buffer volume expansion of the active material by means of the first pore structure with a high volume proportion in the porous carbon, facilitating to improve rate performance of the anode material as well as relieve volume expansion of nano silicon. In addition, the active material is filled in the porous carbon to enable the filling ratio of the second pore structure of the porous carbon to be greater than or equal to 95%, which can prevent stress concentration and electrolyte penetration caused by the material while increasing a capacity of the material. The anode material in the present disclosure has good structural stability, and has advantages of high rate performance, high capacity, and good cycling performance, while can effectively inhibiting volume expansion.

In Example 15, the vacuum degree of vacuum treatment is less than 10⁻⁷ Pa during the preparation, since excessive vacuum cause the fed silicon source gas to be quickly extracted without time for reaction, resulting in a decrease in the filling ratio of the second pore structure, and reducing structural stability and capacity retention rate of the anode material compared with Example 1.

As can be seen from Comparative Example 1, the volume proportion of the first pore structure in the porous carbon is excessively low, so that the anode material cannot completely relieve volume expansion.

As can be seen from Comparative Example 2, the vacuum degree of vacuum treatment is greater than 10 Pa, resulting in a decrease in the filling ratio of the second pore structure, thereby reducing structural stability and capacity retention rate of the anode material.

As can be seen from Comparative Example 3, the anode material was prepared by a conventional mixing method, the filling ratio of the second pore structure is 45%, which is far less than 99.4% in Example 1, resulting in stress concentration easily caused the anode material, and in degradation of cycling performance and large expansion rate of the material.

## Claims

1. An anode material, **characterized in that** the anode material comprises a core and a coating layer arranged on at least part of a surface of the core, wherein the core comprises porous carbon and active material filling in pore structure of the porous carbon, the porous carbon has a first pore structure with a pore size less than or equal to 2 nm and a second pore structure with a pore size greater than 2 nm, a ratio of a pore volume of the first pore structure to a total pore volume of the porous carbon is greater than or equal to 40% calculated through pore volume testing by BET pore distribution, the second pore structure has a filling ratio greater than or equal to 95% calculated through pore volume testing by BET pore distribution, and a median particle size D1 of the porous carbon and a median particle size D2 of the active material satisfy: 0.4≤D1/D2≤6 counted by using a Nano measure through observing under an SEM.

2. The anode material according to claim 1, **characterized in that** the anode material comprises at least one of the following features (1) to (4):
(1) a median particle size D1 of the porous carbon and a median particle size D2 of the active material satisfy: 0.5≤D1/D2≤4.5 counted by using a Nano measure through observing under an SEM;
(2) a material of the porous carbon comprises at least one of carbon black, an ordered mesoporous carbon material, and a nanoporous carbon material;
(3) the porous carbon has a median particle size of 1 nm to 500 nm tested by using a Malvern particle size analyzer; and
(4) the core has a median particle size of 0.8 µm to 10 µm tested by using a Malvern particle size analyzer.

3. The anode material according to claim 1, **characterized in that** the anode material comprises at least one of the following features (1) to (4):
(1) the anode material further comprises active material distributed among the porous carbon;
(2) the active material has a median particle size of 1 nm to 300 nm tested by using a Malvern particle size analyzer;
(3) the active material has a morphology comprising at least one of a point shape, a spherical shape, an ellipsoidal shape, and a flake shape; and
(4) the active material comprise at least one of Li, Na, K, Sn, Ge, Si, SiOₓ, Fe, Mg, Ti, Zn, Al, Ni, P, and Cu, wherein 0<x<2.

4. The anode material according to claim 1, **characterized in that** the coating layer comprises at least one of a carbon layer, a metal oxide layer, a polymer layer, and a nitride layer, and the coating layer comprises at least one of the following features (1) to (5):
(1) a material of the carbon layer comprises at least one of soft carbon, crystalline carbon, amorphous carbon, and hard carbon;
(2) a material of the metal oxide layer comprises at least one of oxides of Sn, Ge, Fe, Si, Cu, Ti, Na, Mg, Al, Ca, and Zn;
(3) a material of the nitride layer comprises at least one of silicon nitride, aluminum nitride, titanium nitride, and tantalum nitride;
(4) a material of the polymer layer comprises at least one of polyaniline, polyacrylic acid, polyurethane, polydopamine, polyacrylamide, sodium carboxymethyl cellulose, polyimide, and polyvinyl alcohol; and
(5) the coating layer has a thickness of 10 nm to 500 nm.

5. The anode material according to claim 1, **characterized in that** the anode material comprises at least one of the following features (1) to (3):
(1) the anode material has a specific surface area less than or equal to 10 m²/g;
(2) the anode material has a median particle size of 0.5 µm to 20 µm tested by using a Malvern particle size analyzer; and
(3) the anode material has a porosity less than or equal to 10%.

6. A preparation method of an anode material, **characterized in that** the preparation method comprises the following:
mixing a raw material containing porous carbon and active material under vacuum to obtain a precursor, wherein the porous carbon has a first pore structure with a pore size less than or equal to 2 nm and a second pore structure with a pore size greater than 2 nm, a ratio of a pore volume of the first pore structure to a total pore volume of the porous carbon is greater than or equal to 40% calculated through pore volume testing by BET pore distribution, a filling ratio of the second pore structure is greater than or equal to 95% calculated through pore volume testing by BET pore distribution, a vacuum degree of the mixing under vacuum is less than or equal to 10 Pa, and a median particle size D1 of the porous carbon and a median particle size D2 of the active material satisfy: 0.4≤D1/D2≤6 counted by using a Nano measure through observing under an SEM; and
coating the precursor to obtain the anode material.

7. The preparation method according to claim 6, **characterized in that** the method comprises at least one of the following features (1) to (4):
(1) a median particle size D1 of the porous carbon and the median particle size D2 of the active material satisfy: 0.5≤D1/D2≤4.5 counted by using a Nano measure through observing under an SEM;
(2) the porous carbon comprises at least one of carbon black, an ordered mesoporous carbon material, and a nanoporous carbon material;
(3) the porous carbon has a median particle size of 1 nm to 500 nm tested by using a Malvern particle size analyzer; and
(4) a mass ratio of the porous carbon to the active material is 40:(10-80).

8. The preparation method according to claim 6, **characterized in that** the method comprises at least one of the following features (1) and (2):
(1) the active material has a median particle size of 1 nm to 300 nm tested by using a Malvern particle size analyzer; and
(2) the active material comprise at least one of Li, Na, K, Sn, Ge, Si, SiOₓ, Fe, Mg, Ti, Zn, Al, Ni, P, and Cu, wherein 0<x<2.

9. The preparation method according to claim 6, **characterized in that** the raw material containing the porous carbon and the active material further comprises an auxiliary agent and a solvent, and the method comprises at least one of the following features (1) to (4):
(1) the auxiliary agent comprises at least one of polyvinyl alcohol, n-octadecanoic acid, lauric acid, polyacrylic acid, sodium dodecylbenzene sulfonate, n-eicosic acid, palmitic acid, tetradecanoic acid, undecanoic acid, fatty acid, hexadecyl trimethyl ammonium bromide, and polyvinyl pyrrolidone;
(2) the solvent comprises at least one of phenol, methanol, ethanol, ethylene glycol, propanol, isopropanol, glycerol, n-butanol, isobutanol, n-hexane, cyclohexane, ethyl acetate, chloroform, carbon tetrachloride, methyl acetate, acetone, and amyl alcohol;
(3) a mass ratio of the auxiliary agent to the porous carbon is (0.05-3):100; and
(4) a mass ratio of the solvent to the porous carbon is 100:(15-55).

10. The preparation method according to claim 6, **characterized in that** the method comprises at least one of the following features (1) and (2):
(1) a device for the mixing under vacuum comprises at least one of a double-star vacuum mixer, a planetary vacuum mixer, a planetary vacuum disperser, a screw vacuum mixer, a multifunctional vacuum mixer, a vacuum disperser, and a vacuum emulsifier; and
(2) the mixing under vacuum has a duration of 0.5 h to 15 h.

11. The preparation method according to claim 6, **characterized in that** in the method, a drying treatment is further carried out after the mixing under vacuum, and the method comprises at least one of the following features (1) to (3):
(1) the drying treatment has a temperature of -50°C to 500°C;
(2) the drying treatment has a duration of 0.5 h to 15 h; and
(3) a device for the drying treatment comprises at least one of a rotary evaporator, a vacuum oven, a spray dryer, a heat treatment furnace, and a freeze dryer.

12. The preparation method according to claim 6, **characterized in that** the step of coating the precursor to obtain the anode material is specifically: mixing the precursor and a coating material for a heat treatment, and the method comprises at least one of the following features (1) to (6):
(1) the coating material comprises at least one of a carbon material, a metal oxide, a polymer material, and a nitride;
(2) the coating material comprises at least one of a carbon material, a metal oxide material, a polymer material, and a nitride material, wherein the carbon material comprises at least one of soft carbon, hard carbon, crystalline carbon, and amorphous carbon;
(3) the coating material comprises at least one of a carbon material, a metal oxide material, a polymer material, and a nitride material, wherein the metal oxide material comprises at least one of oxides of Sn, Ge, Fe, Si, Cu, Ti, Na, Mg, Al, Ca, and Zn;
(4) the coating material comprises at least one of a carbon material, a metal oxide material, a polymer material, and a nitride material, wherein the polymer material comprising at least one of polyaniline, polyacrylic acid, polyurethane, polydopamine, polyacrylamide, sodium carboxymethyl cellulose, polyimide, and polyvinyl alcohol;
(5) the coating material comprises at least one of a carbon material, a metal oxide material, and a nitride material, wherein the nitride material comprises at least one of silicon nitride, aluminum nitride, titanium nitride, and tantalum nitride; and
(6) a mass ratio of the precursor to the coating material is 100:(5-100).

13. The preparation method according to claim 6, **characterized in that** the step of coating the precursor to obtain the anode material is specifically: mixing the precursor and a coating material for a heat treatment, and the method comprises at least one of the following features (1) to (4):
(1) the heat treatment has a temperature of 400°C to 900°C;
(2) the heat treatment has a holding time of 1 h to 12 h;
(3) the heat treatment has a heating rate of 1°C/min to 15°C/min; and
(4) the heat treatment is carried out under a protective atmosphere, wherein the protective atmosphere comprises at least one of nitrogen, helium, neon, argon, and krypton.

14. The preparation method according to claim 6, **characterized in that** the step of coating the precursor to obtain the anode material is specifically: mixing the precursor and a coating material for a heat treatment, and the method further comprises a step of pulverizing and sieving obtained material after the heat treatment, and the method comprises at least one of the following features (1) and (2):
(1) a device for the pulverizing comprises at least one of a mechanical pulverizer, a jet pulverizer, and a crusher; and
(2) a screen size of the sieving is 10 meshes to 800 meshes.

15. A lithium ion battery, **characterized in that** the lithium ion battery comprises the anode material according to any one of claims 1 to 5 or an anode material prepared by the preparation method according to any one of claims 6 to 14.

## Patentansprüche

1. Anodenmaterial, **dadurch gekennzeichnet, dass** das Anodenmaterial einen Kern und eine auf zumindest einem Teil einer Oberfläche des Kerns angeordnete Beschichtungsschicht umfasst, wobei der Kern porösen Kohlenstoff und eine eine Porenstruktur des porösen Kohlenstoffs ausfüllende aktive Masse umfasst, wobei der poröse Kohlenstoff eine erste Porenstruktur mit einer Porengröße, die geringer als oder gleich 2 nm ist, und eine zweite Porenstruktur mit einer Porengröße, die größer als 2 nm ist, aufweist, wobei ein Verhältnis eines Porenvolumens der ersten Porenstruktur zu einem Gesamtporenvolumen des porösen Kohlenstoffs größer als oder gleich 40 % ist, berechnet durch eine Porenvolumenprüfung gemäß einer BET-Porenverteilung, wobei die zweite Porenstruktur ein Füllverhältnis aufweist, das größer als oder gleich 95 % ist, berechnet durch eine Porenvolumenprüfung gemäß einer BET-Porenverteilung, und wobei eine mittlere Partikelgröße D1 des porösen Kohlenstoffs und eine mittlere Partikelgröße D2 der aktiven Masse Folgendes erfüllen:
0,4 ≤ D1 / D2 ≤ 6, gezählt unter Verwendung von *Nano Measure* durch Beobachtung unter einem REM.

2. Anodenmaterial nach Anspruch 1, **dadurch gekennzeichnet, dass** das Anodenmaterial mindestens eines der folgenden Merkmale (1) bis (4) umfasst:
(1) eine mittlere Partikelgröße D1 des porösen Kohlenstoffs und eine mittlere Partikelgröße D2 der aktiven Masse erfüllen Folgendes: 0,5 ≤ D1 / D2 ≤ 4,5, gezählt unter Verwendung von *Nano Measure* durch Beobachtung unter einem REM;
(2) ein Material des porösen Kohlenstoffs umfasst Ruß, ein geordnetes mesoporöses Kohlenstoffmaterial und/oder ein nanoporöses Kohlenstoffmaterial;
(3) der poröse Kohlenstoff weist eine mittlere Partikelgröße von 1 nm bis 500 nm auf, getestet unter Verwendung eines Malvern-Partikelgrößenanalysators; und
(4) der Kern weist eine mittlere Partikelgröße von 0,8 µm bis 10 µm auf, getestet unter Verwendung eines Malvern-Partikelgrößenanalysators.

3. Anodenmaterial nach Anspruch 1, **dadurch gekennzeichnet, dass** das Anodenmaterial mindestens eines der folgenden Merkmale (1) bis (4) umfasst:
(1) das Anodenmaterial umfasst des Weiteren eine aktive Masse, die unter dem porösen Kohlenstoff verteilt ist;
(2) die aktive Masse weist eine mittlere Partikelgröße von 1 nm bis 300 nm auf, getestet unter Verwendung eines Malvern-Partikelgrößenanalysators;
(3) die aktive Masse weist eine Morphologie auf, die eine Punktform, eine Kugelform, eine Ellipsoid-Form und/oder eine Flockenform umfasst; und
(4) die aktive Masse umfasst Li, Na, K, Sn, Ge, Si, SiOₓ, Fe, Mg, Ti, Zn, Al, Ni, P und/oder Cu, wobei 0 < x < 2.

4. Anodenmaterial nach Anspruch 1, **dadurch gekennzeichnet, dass** die Beschichtungsschicht eine Kohlenstoffschicht, eine Metalloxidschicht, eine Polymerschicht und/oder eine Nitridschicht umfasst, und dass die Beschichtungsschicht mindestens eines der folgenden Merkmale (1) bis (5) umfasst:
(1) ein Material der Kohlenstoffschicht umfasst weichen Kohlenstoff, kristallinen Kohlenstoff, amorphen Kohlenstoff und/oder harten Kohlenstoff;
(2) ein Material der Metalloxidschicht umfasst ein Oxid von Sn, Ge, Fe, Si, Cu, Ti, Na, Mg, Al, Ca und/oder Zn;
(3) ein Material der Nitridschicht umfasst Siliziumnitrid, Aluminiumnitrid, Titannitrid und/oder Tantalnitrid;
(4) ein Material der Polymerschicht umfasst Polyanilin, Polyacrylsäure, Polyurethan, Polydopamin, Polyacrylamid, Natriumcarboxymehtylcellulose, Polyimid und/oder Polyvinylalkohol; und
(5) die Beschichtungsschicht weist eine Dicke von 10 nm bis 500 nm auf.

5. Anodenmaterial nach Anspruch 1, **dadurch gekennzeichnet, dass** das Anodenmaterial mindestens eines der folgenden Merkmale (1) bis (3) umfasst:
(1) das Anodenmaterial weist eine spezifische Oberfläche von weniger als oder gleich 10 m²/g auf;
(2) das Anodenmaterial weist eine mittlere Partikelgröße von 0,5 µm bis 20 µm auf, getestet unter Verwendung eines Malvern-Partikelgrößenanalysators; und
(3) das Anodenmaterial weist eine Porösität auf, die geringer als oder gleich 10 % ist.

6. Herstellungsverfahren eines Anodenmaterials, **dadurch gekennzeichnet, dass** das Herstellungsverfahren die folgenden Schritte umfasst:
Mischen eines porösen Kohlenstoff und eine aktive Masse enthaltenden Rohstoffs unter Vakuum, um einen Präkursor zu erhalten, wobei der poröse Kohlenstoff eine erste Porenstruktur mit einer Porengröße, die geringer als oder gleich 2 nm ist, und eine zweite Porenstruktur mit einer Porengröße, die größer als 2 nm ist, aufweist, wobei ein Verhältnis eines Porenvolumens der ersten Porenstruktur zu einem Gesamtporenvolumen des porösen Kohlenstoffs größer als oder gleich 40 % ist, berechnet durch eine Porenvolumenprüfung gemäß einer BET-Porenverteilung, wobei ein Füllverhältnis der zweiten Porenstruktur größer als oder gleich 95 % ist, berechnet durch eine Porenvolumenprüfung gemäß einer BET-Porenverteilung, wobei ein Vakuumgrad des Mischens unter Vakuum geringer als oder gleich 10 Pa ist, und wobei eine mittlere Partikelgröße D1 des porösen Kohlenstoffs und eine mittlere Partikelgröße D2 der aktiven Masse Folgendes erfüllen: 0,4 ≤ D1 / D2 ≤ 6, gezählt unter Verwendung von *Nano Measure* durch Beobachtung unter einem REM; und
Beschichten des Präkursors, um das Anodenmaterial zu erhalten.

7. Herstellungsverfahren nach Anspruch 6, **dadurch gekennzeichnet, dass** das Verfahren mindestens eines der folgenden Merkmale (1) bis (4) umfasst:
(1) eine mittlere Partikelgröße D1 des porösen Kohlenstoffs und die mittlere Partikelgröße D2 der aktiven Masse erfüllen Folgendes: 0,5 ≤ D1 / D2 ≤ 4,5, gezählt unter Verwendung von *Nano Measure* durch Beobachtung unter einem REM;
(2) der poröse Kohlenstoff umfasst Ruß, ein geordnetes mesoporöses Kohlenstoffmaterial und/oder ein nanoporöses Kohlenstoffmaterial;
(3) der poröse Kohlenstoff weist eine mittlere Partikelgröße von 1 nm bis 500 nm auf, getestet unter Verwendung eines Malvern-Partikelgrößenanalysators; und
(4) ein Massenverhältnis des porösen Kohlenstoffs zu der aktiven Masse beträgt 40 : (10-80).

8. Herstellungsverfahren nach Anspruch 6, **dadurch gekennzeichnet, dass** das Verfahren die folgenden Merkmale/das folgende Merkmal (1) und/oder (2) umfasst:
(1) die aktive Masse weist eine mittlere Partikelgröße von 1 nm bis 300 nm auf, getestet unter Verwendung eines Malvern-Partikelgrößenanalysators; und
(2) die aktive Masse umfasst Li, Na, K, Sn, Ge, Si, SiOₓ, Fe, Mg, Ti, Zn, Al, Ni, P und/oder Cu, wobei 0 < x < 2.

9. Herstellungsverfahren nach Anspruch 6, **dadurch gekennzeichnet, dass** der den porösen Kohlenstoff und die aktive Masse enthaltende Rohstoff des Weiteren ein Hilfsmittel und ein Lösungsmittel umfasst und dass das Verfahren mindestens eines der folgenden Merkmale (1) bis (4) umfasst:
(1) das Hilfsmittel umfasst Polyvinylalkohol, n-Octadecansäure, Laurinsäure, Polyacrylsäure, Natriumdodecylbenzolsulfonat, n-Eicosansäure, Palmitinsäure, Tetradecansäure, Undecansäure, Fettsäure, Hexadecyltrimethylammoniumbromid und/oder Polyvinylpyrrolidon;
(2) das Lösungsmittel umfasst Phenol, Methanol, Ethanol, Ethylenglykol, Propanol, Isopropanol, Glycerol, n-Butanol, Isobutanol, n-Hexan, Cyclohexan, Essigsäureethylester, Chloroform, Kohlenstofftetrachlorid, Essigsäuremethylester, Aceton und/oder Amylalkohol;
(3) ein Massenverhältnis des Hilfsmittels zu dem porösen Kohlenstoff beträgt (0,05-3) : 100; und
(4) ein Massenverhältnis des Lösungsmittels zu dem porösen Kohlenstoff beträgt 100 : (15-55).

10. Herstellungsverfahren nach Anspruch 6, **dadurch gekennzeichnet, dass** das Verfahren die folgenden Merkmale/das folgende Merkmal (1) und/oder (2) umfasst:
(1) eine Vorrichtung für das Mischen unter Vakuum umfasst einen Doppelsternvakuummischer, einen Planetenvakuummischer, eine Planetenvakuumdispergiereinrichtung, einen Schneckenvakuummischer, einen multifunktionalen Vakuummischer, eine Vakuumdispergiereinrichtung und/oder eine Vakuumelmugiermaschine; und
(2) das Mischen unter Vakuum hat eine Dauer von 0,5 h bis 15 h.

11. Herstellungsverfahren nach Anspruch 6, **dadurch gekennzeichnet, dass** in dem Verfahren weiter nach dem Mischen unter Vakuum eine Trocknungsbehandlung ausgeführt wird und dass das Verfahren mindestens eines der folgenden Merkmale (1) bis (3) umfasst:
(1) die Trocknungsbehandlung weist eine Temperatur von -50 °C bis 500 °C auf;
(2) die Trocknungsbehandlung hat eine Dauer von 0,5 h bis 15 h; und
(3) eine Vorrichtung für die Trocknungsbehandlung umfasst einen Rotationsverdampfer, einen Vakuumofen, einen Sprühtrockner, einen Erhitzungsbehandlungsofen und/oder einen Gefriertrockner.

12. Herstellungsverfahren nach Anspruch 6, **dadurch gekennzeichnet, dass** der Schritt des Beschichtens des Präkursors, um das Anodenmaterial zu erhalten, konkret folgender ist: Mischen des Präkursors und eines Beschichtungsmaterials für eine Erhitzungsbehandlung, und dass das Verfahren mindestens eines der folgenden Merkmale (1) bis (6) umfasst:
(1) das Beschichtungsmaterial umfasst ein Kohlenstoffmaterial, ein Metalloxid, ein Polymermaterial und/oder ein Nitrid;
(2) das Beschichtungsmaterial umfasst ein Kohlenstoffmaterial, ein Metalloxidmaterial, ein Polymermaterial und/oder ein Nitridmaterial, wobei das Kohlenstoffmaterial weichen Kohlenstoff, harten Kohlenstoff, kristallinen Kohlenstoff und/oder amorphen Kohlenstoff umfasst;
(3) das Beschichtungsmaterial umfasst ein Kohlenstoffmaterial, ein Metalloxidmaterial, ein Polymermaterial und/oder ein Nitridmaterial, wobei das Metalloxidmaterial ein Oxid von Sn, Ge, Fe, Si, Cu, Ti, Na, Mg, Al, Ca und/oder Zn umfasst;
(4) das Beschichtungsmaterial umfasst ein Kohlenstoffmaterial, ein Metalloxidmaterial, ein Polymermaterial und/oder ein Nitridmaterial, wobei das Polymermaterial Polyanilin, Polyacrylsäure, Polyurethan, Polydopamin, Polyacrylamid, Natriumcarboxymehtylcellulose, Polyimid und/oder Polyvinylalkohol umfasst;
(5) das Beschichtungsmaterial umfasst ein Kohlenstoffmaterial, ein Metalloxidmaterial und/oder ein Nitridmaterial, wobei das Nitridmaterial Siliziumnitrid, Aluminiumnitrid, Titannitrid und/oder Tantalnitrid umfasst; und
(6) ein Massenverhältnis des Präkursors zu dem Beschichtungsmaterial beträgt 100 : (5-100).

13. Herstellungsverfahren nach Anspruch 6, **dadurch gekennzeichnet, dass** der Schritt des Beschichtens des Präkursors, um das Anodenmaterial zu erhalten, konkret folgender ist: Mischen des Präkursors und eines Beschichtungsmaterials für eine Erhitzungsbehandlung, und dass das Verfahren mindestens eines der folgenden Merkmale (1) bis (4) umfasst:
(1) die Erhitzungsbehandlung weist eine Temperatur von 400 °C bis 900 °C auf;
(2) die Erhitzungsbehandlung hat eine Haltezeit von 1 h bis 12 h;
(3) die Erhitzungsbehandlung weist eine Erhitzungsgeschwindigkeit von 1 °C/min bis 15 °C/min auf; und
(4) die Erhitzungsbehandlung wird unter einer Schutzatmosphäre ausgeführt, wobei die Schutzatmosphäre Stickstoff, Helium, Neon, Argon und/oder Krypton umfasst.

14. Herstellungsverfahren nach Anspruch 6, **dadurch gekennzeichnet, dass** der Schritt des Beschichtens des Präkursors, um das Anodenmaterial zu erhalten, konkret folgender ist: Mischen des Präkursors und eines Beschichtungsmaterials für eine Erhitzungsbehandlung, und dass das Verfahren des Weiteren einen Schritt des Pulverisierens und des Siebens von erhaltenem Material nach der Erhitzungsbehandlung umfasst, und dass das Verfahren mindestens die folgenden Merkmale/das folgende Merkmal (1) und/oder (2) umfasst:
(1) eine Vorrichtung für das Pulverisieren umfasst einen mechanischen Pulverisator, einen Strahlpulverisator und/oder eine Zerkleinerungsmaschine; und
(2) eine Siebgröße für das Sieben ist 10 Mesh bis 800 Mesh.

15. Lithiumionenbatterie, **dadurch gekennzeichnet, dass** die Lithiumionenbatterie das Anodenmaterial nach einem der Ansprüche 1 bis 5 oder ein durch das Herstellungsverfahren nach einem der Ansprüche 6 bis 14 hergestelltes Anodenmaterial umfasst.

## Revendications

1. Matériau d'anode, **caractérisé en ce que** le matériau d'anode comprend un noyau et une couche de revêtement disposée sur au moins une partie d'une surface du noyau, dans lequel le noyau comprend du carbone poreux et de la matière active remplissant une structure poreuse du carbone poreux, dans lequel le carbone poreux a une première structure poreuse avec une taille de pores inférieure ou égale à 2 nm et une deuxième structure poreuse avec une taille de pores supérieure à 2 nm, dans lequel un rapport d'un volume poreux de la première structure poreuse par rapport à un volume poreux total du carbone poreux est supérieur ou égal à 40 %, calculé par un essai de volume poreux selon une distribution des pores BET, dans lequel la deuxième structure poreuse a un taux de remplissage supérieur ou égal à 95 %, calculé par un essai de volume poreux selon une distribution des pores BET, et dans lequel une taille D1 moyenne de particules du carbone poreux et une taille D2 moyenne de particules de la matière active satisfont : 0,4 ≤ D1 / D2 ≤ 6, comptées en utilisant *Nano Measure* par l'observation sous un MEB.

2. Matériau d'anode selon la revendication 1, **caractérisé en ce que** le matériau d'anode comprend au moins une parmi les caractéristiques (1) à (4) suivantes :
(1) une taille D1 moyenne de particules du carbone poreux et une taille D2 moyenne de particules de la matière active satisfont : 0,5 ≤ D1 / D2 ≤ 4,5, comptées en utilisant *Nano Measure* par l'observation sous un MEB ;
(2) un matériau du carbone poreux comprend au moins un parmi le noir de carbone, un matériau de carbone mésoporeux ordonné et un matériau de carbone nanoporeux ;
(3) le carbone poreux a une taille moyenne de particules de 1 nm à 500 nm, testée en utilisant un analyseur de tailles de particules Malvern ; et
(4) le noyau a une taille moyenne de particules de 0,8 µm à 10 µm, testée en utilisant un analyseur de tailles de particules Malvern.

3. Matériau d'anode selon la revendication 1, **caractérisé en ce que** le matériau d'anode comprend au moins une parmi les caractéristiques (1) à (4) suivantes :
(1) le matériau d'anode comprend en outre de la matière active distribuée parmi le carbone poreux ;
(2) la matière active a une taille moyenne de particules de 1 nm à 300 nm, testée en utilisant un analyseur de tailles de particules Malvern ;
(3) la matière active a une morphologie comprenant au moins une parmi une forme de point, une forme sphérique, une forme ellipsoïdale et une forme de flocon ; et
(4) la matière active comprend au moins un parmi Li, Na, K, Sn, Ge, Si, SiOₓ, Fe, Mg, Ti, Zn, Al, Ni, P et Cu, dans lequel 0 < x < 2.

4. Matériau d'anode selon la revendication 1, **caractérisé en ce que** la couche de revêtement comprend au moins une parmi une couche de carbone, une couche d'oxyde métallique, une couche polymère et une couche de nitrure, et **en ce que** la couche de revêtement comprend au moins une parmi les caractéristiques (1) à (5) suivantes :
(1) un matériau de la couche de carbone comprend au moins un parmi le carbone doux, le carbone cristallin, le carbone amorphe et le carbone dur ;
(2) un matériau de la couche d'oxyde métallique comprend au moins un parmi des oxides de Sn, Ge, Fe, Si, Cu, Ti, Na, Mg, Al, Ca et Zn ;
(3) un matériau de la couche de nitrure comprend au moins un parmi le nitrure de silicium, le nitrure d'aluminium, le nitrure de titane et le nitrure de tantale ;
(4) un matériau de la couche polymère comprend au moins un parmi la polyaniline, l'acide polyacrylique, le polyuréthane, la polydopamine, le polyacrylamide, la carboxyméhtylcellulose sodique, le polyimide et l'alcool polyvinylique ; et
(5) la couche de revêtement a une épaisseur de 10 nm à 500 nm.

5. Matériau d'anode selon la revendication 1, **caractérisé en ce que** le matériau d'anode comprend au moins une parmi les caractéristiques (1) à (3) suivantes :
(1) le matériau d'anode a une surface spécifique inférieure ou égale à 10 m²/g ;
(2) le matériau d'anode a une taille moyenne de particules de 0,5 µm à 20 µm, testée en utilisant un analyseur de tailles de particules Malvern ; et
(3) le matériau d'anode a une porosité inférieure ou égale à 10 %.

6. Procédé de préparation d'un matériau d'anode, **caractérisé en ce que** le procédé de préparation comprend les étapes suivantes :
mélanger une matière première contenant du carbone poreux et de la matière active sous vide pour obtenir un précurseur, dans lequel le carbone poreux a une première structure poreuse avec une taille de pores inférieure ou égale à 2 nm et une deuxième structure poreuse avec une taille de pores supérieure à 2 nm, dans lequel un rapport d'un volume poreux de la première structure poreuse par rapport à un volume poreux total du carbone poreux est supérieur ou égal à 40 %, calculé par un essai de volume poreux selon la distribution des pores BET, dans lequel un taux de remplissage de la deuxième structure poreuse est supérieur ou égal à 95 %, calculé par un essai de volume poreux selon la distribution des pores BET, dans lequel un degré de vide du mélange sous vide est inférieur ou égal à 10 Pa, et dans lequel une taille D1 moyenne de particules du carbone poreux et une taille D2 moyenne de particules de la matière active satisfont : 0,4 ≤ D1 / D2 ≤ 6, comptées en utilisant *Nano Measure* par l'observation sous un MEB ; et
revêtir le précurseur pour obtenir le matériau d'anode.

7. Procédé de préparation selon la revendication 6, **caractérisé en ce que** le procédé comprend au moins une parmi les caractéristiques (1) à (4) suivantes :
(1) une taille D1 moyenne de particules du carbone poreux et la taille D2 moyenne de particules de la matière active satisfont : 0,5 ≤ D1 / D2 ≤ 4,5, comptées en utilisant *Nano Measure* par l'observation sous un MEB ;
(2) le carbone poreux comprend au moins un parmi le noir de carbone, un matériau de carbone mésoporeux ordonné et un matériau de carbone nanoporeux ;
(3) le carbone poreux a une taille moyenne de particules de 1 nm à 500 nm, testée en utilisant un analyseur de tailles de particules Malvern ; et
(4) un rapport massique du carbone poreux par rapport à la matière active est 40 : (10-80).

8. Procédé de préparation selon la revendication 6, **caractérisé en ce que** le procédé comprend au moins une parmi les caractéristiques (1) et (2) suivantes :
(1) la matière active a une taille moyenne de particules de 1 nm à 300 nm, testée en utilisant un analyseur de tailles de particules Malvern ; et
(2) la matière active comprend au moins un parmi Li, Na, K, Sn, Ge, Si, SiOₓ, Fe, Mg, Ti, Zn, Al, Ni, P et Cu, dans lequel 0 < x < 2.

9. Procédé de préparation selon la revendication 6, **caractérisé en ce que** la matière première contenant le carbone poreux et la matière active comprend en outre un agent auxiliaire et un solvant, et **en ce que** le procédé comprend au moins une parmi les caractéristiques (1) à (4) suivantes :
(1) l'agent auxiliaire comprend au moins un parmi l'alcool polyvinylique, l'acide n-octadécanoïque, l'acide laurique, l'acide polyacrylique, le dodécylbenzène sulfonate de sodium, l'acide eicosanoïque, l'acide palmitique, l'acide tétradécanoïque, l'acide undécanoïque, l'acide gras, la bromure d'hexadécyltriméthylammonium et la polyvinylpyrrolidone ;
(2) le solvant comprend au moins un parmi le phénol, le méthanol, l'éthanol, l'éthylène glycol, le propanol, l'isopropanol, le glycérol, le n-butanol, l'isobutanol, le n-hexane, le cyclohexane, l'acétate d'éthyle, le chloroforme, le tétrachlorure de carbone, l'acétate de méthyle, l'acétone et l'alcool amylique ;
(3) un rapport massique de l'agent auxiliaire par rapport au carbone poreux est (0,05-3) : 100 ; et
(4) un rapport massique du solvant par rapport au carbone poreux est 100 : (15-55).

10. Procédé de préparation selon la revendication 6, **caractérisé en ce que** le procédé comprend au moins une parmi les caractéristiques (1) et (2) suivantes :
(1) un dispositif pour le mélange sous vide comprend au moins un parmi un mélangeur sous vide à double étoile, un mélangeur sous vide planétaire, un disperseur sous vide planétaire, un mélangeur sous vide à vis, un mélangeur sous vide multifonctionnel, un disperseur sous vide et un émulseur sous vide ; et
(2) le mélange sous vide a une durée de 0,5 h à 15 h.

11. Procédé de préparation selon la revendication 6, **caractérisé en ce qu'**un traitement de séchage est effectué en outre dans le procédé après le mélange sous vide, et **en ce que** le procédé comprend au moins une parmi les caractéristiques (1) à (3) suivantes :
(1) le traitement de séchage a une température de -50 °C à 500 °C ;
(2) le traitement de séchage a une durée de 0,5 h à 15 h ; et
(3) un dispositif pour le traitement de séchage comprend au moins un parmi un évaporateur rotatif, une étuve à vide, un séchoir à pulvérisation, un four de traitement de chauffage et un lyophilisateur.

12. Procédé de préparation selon la revendication 6, **caractérisé en ce que** l'étape consistant à revêtir le précurseur pour obtenir le matériau d'anode est spécifiquement l'étape suivante : mélanger le précurseur et un matériau de revêtement pour un traitement de chauffage, et **en ce que** le procédé comprend au moins une parmi les caractéristiques (1) à (6) suivantes :
(1) le matériau de revêtement comprend au moins un parmi un matériau de carbone, un oxyde métallique, un matériau polymère et un nitrure ;
(2) le matériau de revêtement comprend au moins un parmi un matériau de carbone, un matériau d'oxyde métallique, un matériau polymère et un matériau de nitrure, dans lequel le matériau de carbone comprend au moins un parmi le carbone doux, le carbone dur, le carbone cristallin et le carbone amorphe ;
(3) le matériau de revêtement comprend au moins un parmi un matériau de carbone, un matériau d'oxyde métallique, un matériau polymère et un matériau de nitrure, dans lequel le matériau d'oxyde métallique comprend au moins un parmi des oxides de Sn, Ge, Fe, Si, Cu, Ti, Na, Mg, Al, Ca et Zn ;
(4) le matériau de revêtement comprend au moins un parmi un matériau de carbone, un matériau d'oxyde métallique, un matériau polymère et un matériau de nitrure, dans lequel le matériau polymère comprend au moins un parmi la polyaniline, l'acide polyacrylique, le polyuréthane, la polydopamine, le polyacrylamide, la carboxyméhtylcellulose sodique, le polyimide et l'alcool polyvinylique ;
(5) le matériau de revêtement comprend au moins un parmi un matériau de carbone, un matériau d'oxyde métallique et un matériau de nitrure, dans lequel le matériau de nitrure comprend au moins un parmi le nitrure de silicium, le nitrure d'aluminium, le nitrure de titane et le nitrure de tantale ; et
(6) un rapport massique du précurseur par rapport au matériau de revêtement est 100 : (5-100).

13. Procédé de préparation selon la revendication 6, **caractérisé en ce que** l'étape consistant à revêtir le précurseur pour obtenir le matériau d'anode est spécifiquement l'étape suivante : mélanger le précurseur et un matériau de revêtement pour un traitement de chauffage, et **en ce que** le procédé comprend au moins une parmi les caractéristiques (1) à (4) suivantes :
(1) le traitement de chauffage a une température de 400 °C à 900 °C ;
(2) le traitement de chauffage a un temps de maintien de 1 h à 12 h ;
(3) le traitement de chauffage a une vitesse de chauffage de 1 °C/min à 15 °C/min ; et
(4) le traitement de chauffage est effectué sous une atmosphère protectrice, dans lequel l'atmosphère protectrice comprend au moins un parmi l'azote, l'hélium, le néon, l'argon et le krypton.

14. Procédé de préparation selon la revendication 6, **caractérisé en ce que** l'étape consistant à revêtir le précurseur pour obtenir le matériau d'anode est spécifiquement l'étape suivante : mélanger le précurseur et un matériau de revêtement pour un traitement de chauffage, et **en ce que** le procédé comprend en outre une étape consistant à pulvériser et à tamiser du matériau obtenu après le traitement de chauffage, et **en ce que** le procédé comprend au moins une parmi les caractéristiques (1) et (2) suivantes :
(1) un dispositif pour la pulvérisation comprend au moins un parmi un pulvérisateur mécanique, un pulvérisateur à jet et un broyeur ; et
(2) une taille de tamis pour le tamisage est 10 mesh à 800 mesh.

15. Pile au lithium-ion, **caractérisée en ce que** la pile au lithium-ion comprend le matériau d'anode selon l'une quelconque des revendications 1 à 5 ou un matériau d'anode préparé par le procédé de préparation selon l'une quelconque des revendications 6 à 14.
